# EUROPEAN PATENT SPECIFICATION

(11) **EP 1 521 543 B1**
(45) Date of publication and mention of the grant of the patent: **30.11.2005**
(21) Application number: 03762366.7
(22) Date of filing: 03.07.2003
(51) Int. Cl.: A47J 37/07

(54) **WOOD FED BARBECUE APPARATUS**
HOLZBEFEUERTES BARBECUEGERÄT
BARBECUE A CHARBON DE BOIS

(30) Priority: 03.07.2002 CA 2390427
(43) Date of publication of application: 13.04.2005
(73) Proprietor: Woodflame Inc., St-Léonard, Québec H1P 1A5 (CA)
(72) Inventor: BOUCHER, Gilles, LaSalle, Québec H8R 3P3 (CA)
(74) Representative: Maureau, Philippe
(86) International application number: PCT/CA2003/001004
(87) International publication number: WO 2004/004527

(56) References cited:
- EP-A- 0 302 685
- WO-A-01/22854
- WO-A-99/07267
- US-A- 4 638 787

## Description

The present invention relates generally to the field of cooking devices. More particularly, it concerns a portable wood fed barbecue apparatus comprising a combustion system using wood as the main source of fuel.

### BACKGROUND OF THE INVENTION

With the ever increasing cost of oil products and the threat of supply shortages, interest in alternate forms of heating has increased in recent years. Wood being a renewable resource is a popular alternative and as a result a preponderance of wood burning stoves has emerged.

Barbecue apparatuses comprising a burner using wood as the main source of fuel are already known in the prior art Such barbecue apparatuses typically comprise a casing having an open top for supporting a cooking grill and a burner located in the casing under the cooking grill. The burner, which is tubular, comprises a combustion chamber located over an air chamber, and a diffuser plate provided with air openings separating the combustion chamber from the air chamber. The air chamber has a forced-air intake operatively connected to a ventilation system that provides forced-air to the air chamber. In operation pieces of wood are placed in the combustion chamber on the diffuser plate and light. The fan is then turned on to maintain the combustion of the wood. Examples of such prior art wood fed barbecue cooking devices are found in the Applicant's prior patent applications WO9908048 and WO9907267 and in US patents Nos 4,924,847 and 4,747,781.

WO 99/07267 discloses a grill assembly (12) comprising a housing (30) including a cooking surface (32), Sidewalls (34) skirting the cooking surface (32) and a bottom wall (36) including an inlet (38) adapted to be sealingly connected to a source of heat to present heat loss and to promote collection of the heat in the housing (30). This document further discloses a burner (14) mounted on a dome-shaped member (79) set on the bottom wall (17) of the container (16). The dome-shaped member (79) with the bottom wall (17) of the container (16) are defining an air-receiving chamber (70) devised to provide air in the combustion chamber (60) of the burner for the combustion of a fuel therein.

The grill assembly (12) of WO 99/07267 also comprises sidewalls (18) of the casing which are slanted with respect to the base wall of the casing.

Also known in the art are US patents no. US 4,924,847 and US 4,747,781 which describe a wood stove and a cooking unit in which virtually complete combustion is achieved by feeding combustion air under pressure through openings in a diffuser plate with the diameter of the openings having a calculated size and spacing therebetween. Although the problem of complete and clean combustion has been solved by such wood fed barbecue cooking devices, several drawbacks remain associated with their use.

One of these drawbacks is due to the loss of radiant energy/heat generated by the burner of these prior art cooking devices. These devices generate a significant amount of radiant energy/heat which is emitted from the sides of the burner. This energy loss is considerable and consequently entails the use of a greater amount of combustible material or wood in order to fuel the fire inside of the burner. The radiant energy/heat so generated also contributes to compounding the problems and safety hazards associated with the extreme temperatures that the external shields of these cooking devices typically reach, often over 600°F.

Another drawback associated with the prior art barbecue cooking devices is inherent to the barbecue cooking surface itself. The temperature of the cooking surface is typically very uneven. Indeed, the heat and temperature of that part of the cooking surface and/or grill located directly above the fire and/or flames are generally much more intense than those found at the corners or outward edges of the cooking surface which are not situated directly above the fire and/or flames. This entails that barbecued foods are often unintentionally charred, burned, overcooked or undercooked. Therefore, the uneven heat and temperature of the cooking surfaces of such prior art barbecue devices constitutes an additional and major inconvenience that makes barbecuing foods such as meats to the desired doneness a guessing game for even the most experienced cook.

There is therefore a need for an improved wood fed cooking device. More specifically, there is a need for a cooking device that would provide for less radiant energy/heat loss, for an evenly heated cooking surface and for lower temperatures reached by the external shields of the device.

### SUMMARY OF THE INVENTION

An object of the present invention is to provide a barbecue cooking device that satisfies at least one of the above mentioned needs.

Accordingly, that object is achieved with a barbecue cooking device (1) comprising:
- an inverted frustum casing (10) of a given height (11), having a base wall (20), an open top (30) and a slanted side wall (40) section extending from the base wall (20) to the top (30) and having an inner surface (50) made of a material capable of reflecting radiant energy;
- a grill (60) mountable on the open top (30);
- a cup-shaped burner (70) with a bottom wall (72) and a side wall section (74), the burner (70) comprising:
   - a combustion chamber (76) in an upper portion thereof for burning a combustible material, thereby emitting thermal energy;
   - an air chamber (78) located beneath the combustion chamber (76), the air chamber (78) having an air intake (82) for receiving air; and
   - a diffuser plate (79) separating the combustion chamber (76) and the air chamber (78); and
   - a blower (90) operatively connected to the air intake (82) of the air chamber (78) to provide forced-air to the air chamber (78);
the barbecue cooking device (1) being characterized In that:
- the side wall section (40) of the casing (10) extends at an angle ranging from about 135 degrees to about 110 degrees with respect to the base wall (20) of the casing (10);
- the burner (70) is located inside the casing (10) with said side wall section (74) of the burner (70) spanning the height (11) of the casing (10) such that most of the thermal energy emitted by the combustion chamber (76) radiate radially towards the slanted side wall section (40) of the casing (10) where it is reflected towards the grill (60) mounted on the top of the casing (10); and
- the blower (90) is part of a ventilation system (91) that further comprises:
   - a pressurized air chamber (95) located downstream of the blower (90), said pressurized air chamber (95) having an outlet end (93) distal from the blower (90); and
   - an air intake tube (98) having an open top end (99) secured to the air intake (82) of the air chamber (78): and an open bottom end (92) adapted to be connected to the outlet end (93) of the pressurized air chamber (95).

Thanks to the configuration of the cooking device with the burner being located entirely within the casing with its side wall section spanning the height of the casing, the use of radiant energy radiating from the burner is optimized.

The inverted frustum casing may have the shape of an inverted cone or pyramid. However in accordance with a preferred embodiment It has the shape of an inverted pyramid. More preferably, the burner is generally tubular and has a round bottom wall. However, the burner may also have a generally rectangular shape with a rectangular bottom wall.

Also preferably, the bottom wall of the burner covers more than 50% of the surface area of the casing's bottom wall. Even more preferably, it covers more than 75%.

In accordance with a preferred aspect, the barbecue cooking device comprises a heat deflecting shield mountable beneath the grill on top of the burner for deflecting flames emitted from the burner.

Still preferably, the deflecting shield is sized to cover substantially all of the surface area of the grill. In that case the deflecting shield is also used for diffusing the thermal energy reflected towards the grill, thus providing an evenly heated cooking surface.

More preferably, the deflecting shield has a central portion free of slits, and a peripheral portion having a series of longitudinal slits. In use, when the shield is mounted beneath the grill, the central portion is located on top of the burner. Even more preferably, the longitudinal slits of the shield are in a staggered arrangement with respect to the longitudinal slots of the grill.

According to another aspect of the present invention, the slanted side wall section of the casing extends at an angle ranging from about 135 degrees to about 110 degrees with respect to the base wall of the casing. More preferably, that angle is 120 degrees.

According to yet another preferred aspect of the present invention, the barbecue cooking device comprises means for cooling the slanted wall section. Preferably, the cooling means comprises an air inlet located in a lower portion of the slanted wall section for allowing air to enter into the casing and an air outlet located in an upper portion of the slanted wall section for allowing air to exit the casing, thereby allowing a flow of air that cools the slanted wall section. More preferably, the air inlet and the air outlet consist of a plurality of openings provided in the slanted side wall.
As can be appreciated, a cooking device according to the invention provides for less radiant energy/heat loss. Furthermore, some preferred embodiments of the invention provide for an evenly heated cooking surface and for lower temperatures reached by the external shields of the device.

### BRIEF DESCRIPTION OF THE DRAWINGS

These and other objects and advantages of the invention will become apparent upon reading the detailed description and upon referring to the drawings in which :
Figures 1 A and B are perspective views of the barbecue device according to a first preferred embodiment of the invention showing the grill handle in an assembled (B) and a disassembled position (A).
Figure 2 is an exploded perspective view of the barbecue cooking device shown in figure 1.
Figure 3 is a cross sectional side view of the barbecue cooking device shown in figures 1 and 2.
Figure 4 is an exploded perspective view of the grill and casing of a barbecue cooking device according to a second preferred embodiment of the present invention.
Figure 5 is a top view of a grill according to a further preferred embodiment of the barbecue cooking device of the present invention.
Figure 6 is a top view of a deflecting shield to be used with the grill shown in figure 5 according to a further preferred embodiment of the barbecue cooking device of the present invention.
Figure 7 is a top view of the grill of figure 5 with the defecting shield of figure 6 shown in dotted lines.
Figure 8 is a side view of the grill and deflecting shield shown in figure 7.
Figure 9 is a perspective view of a burner according to a further preferred embodiment.

While the invention will be described in conjunction with example embodiments, it will be understood that it is not intended to limit the scope of the invention to such embodiments. On the contrary, it is intended to cover all alternatives, modifications and equivalents as may be included as defined by the appended claims.

### DESCRIPTION OF PREFERRED EMBODIMENTS

In the following description, similar features in the drawings have been given similar reference numerals and in order to lighten the figures, some elements are not referred to in some figures if they were already identified in a preceding figure.

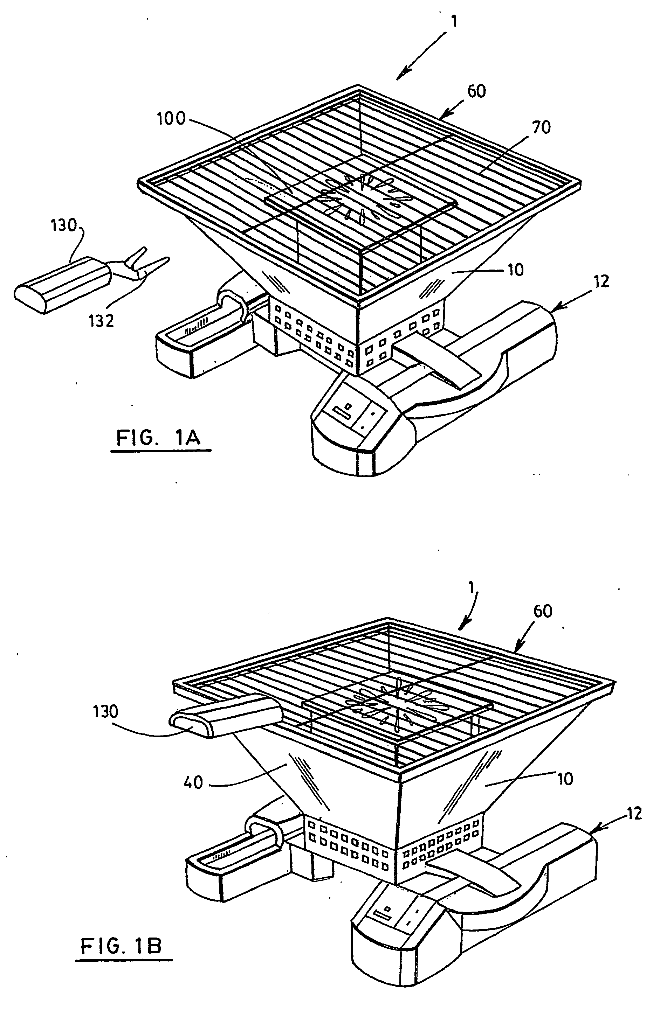

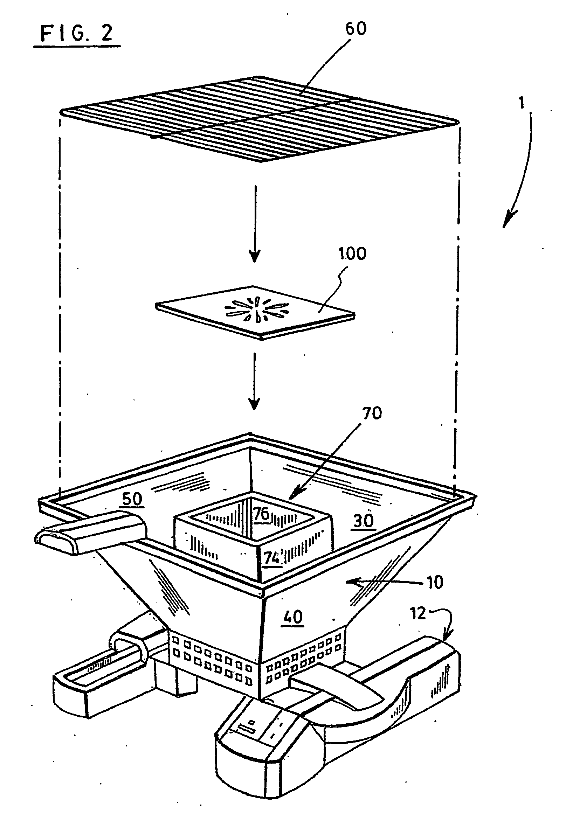

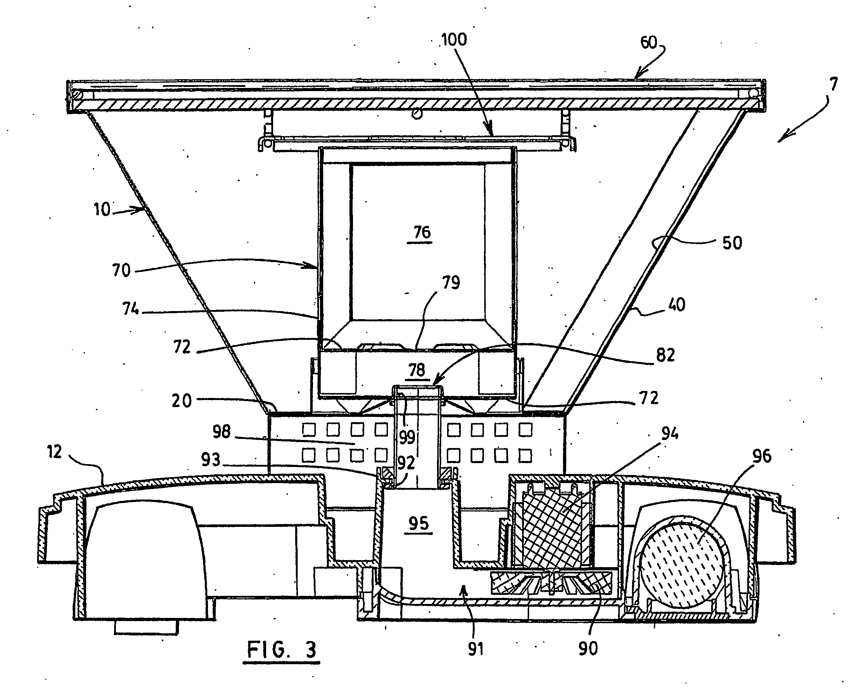

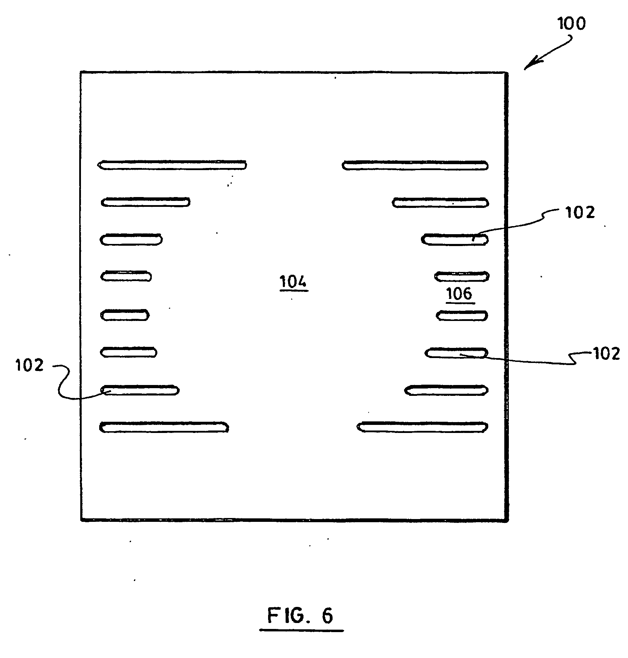

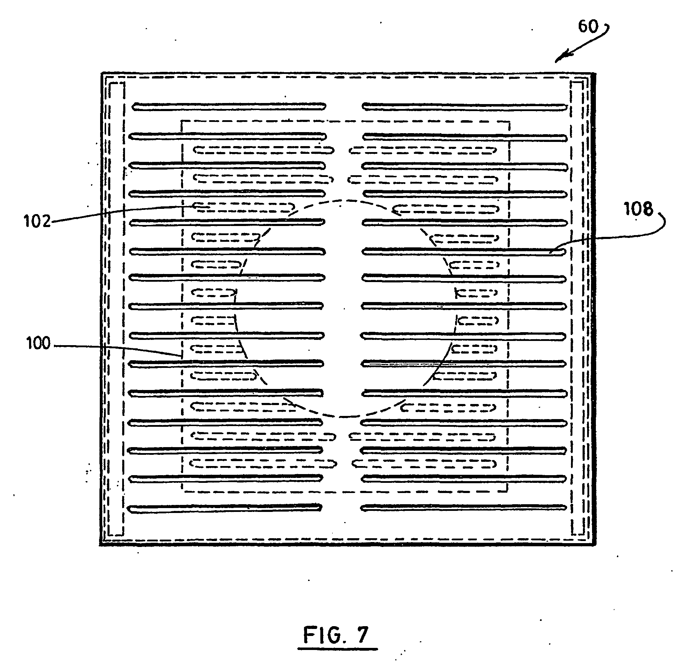

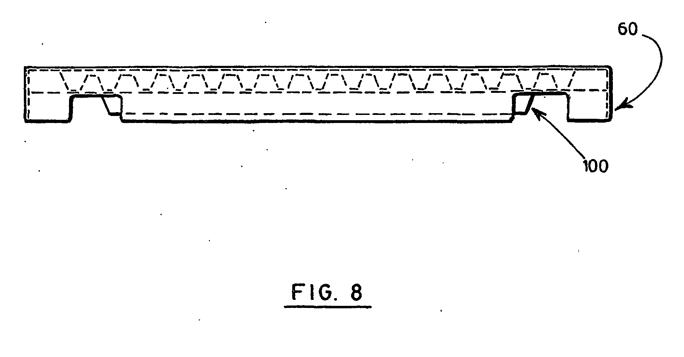

Referring to any one of figures 1 to 9, a barbecue cooking device (1) according to the invention comprises an inverted frustum casing (10) of a given height (11) having a base wall (20), an open top (30) and a slanted side wall section (40) extending from the base wall (20) to the top (30). The embodiment illustrated preferably has an inverted pyramidal shape and thus comprises four of said side walls (40). The inner surface (50) of these side walls (40) are made of a material capable of reflecting radiant energy, as for example steel, aluminum, copper. The casing (10) is preferably mounted on a base support (12).
The barbecue (1) further comprises a grill (60) mountable on the open top (30) and a cup-shaped burner (70) located inside the casing (10). The burner (70) has a bottom wall (72) and a side wall section (74) delimiting a combustion chamber (76) located in an upper portion of the burner and an air chamber (78) located beneath the combustion chamber (76). A diffuser plate (79) is separating the combustion chamber (76) and the air chamber (78). The air chamber (78) has an air intake (82) operatively connected to a blower (90) to provide forced-air to the air chamber (78). The combustion chamber (76) is used to receive and burn a combustible material such as wood whereas the air chamber (78) provides the air necessary to burn the combustible material. The blower (90) is part of a ventilation system (91) that comprises the blower (90) driven by an electric motor (94), and a power supply (96) that provides power to the electric motor (94). The power supply (96) is preferably DC cells or batteries. Although not clearly illustrated, the ventilation system (91) comprises an opening for receiving air from outside. The ventilation system (92) also comprises an air intake tube (98) having an open top end (99) adapted to fit in the air intake (82) of the air chamber (78) and an open bottom end (92) adapted to be connected to an outlet end (93) of a pressurized air chamber (95) located downstream from the blower (90).
In use, pieces of wood (not illustrated) are placed on the diffuser plate (80) in the combustion chamber (78) and lighted. Then, the blower (90) is turned on, to draw the air from outside into the ventilation system (91). The blower (90) forces the air into the air intake tube (98) and then into the air chamber (78) of the burner (70) where air under pressure is forced through the perforated diffuser plate (79) to promote combustion of the wood.

As can be appreciated, the burner (70) is located inside the casing (10) with its side wall section (74) spanning the height of the casing (10) such that most, and preferably all of the thermal energy emitted by the combustion chamber (76) radiates radially towards the slanted side wall section (40) of the casing (10) where it is reflected towards the grill (60) mounted on top of the casing (10).

Thanks to the specific configuration of the barbecue cooking device (1) of the invention, the use of thermal energy radiating from the burner (70) is optimized. Indeed, a majority of the radiant thermal energy emitted radially from the side wall section (74) of the burner (70) is able to effectively reach the inner surface (50) of the slanted walls (40) of the casing (10). This thermal energy is thus recuperated and reflected upwardly to the cooking surface or grill (60) as will be discussed further herein below. Therefore a certain proportionality and proximity are required between the side wall section (74) of the burner (70) and the inner surface (50) of the slanted side wall section (40) of the casing (10) as discussed herein and shown in figures 1 to 3. This is understandable for the proper operation of the barbecue cooking device (1) of the present invention.

It is worth mentioning that although the casing (10) of the embodiment illustrated has an inverted pyramidal shape, it may also have an inverted conical shape or any other shape that allows and provides for a slanted side wall section (40) as well as for the convenient insertion of a centrally located burner (70), and that without departing from the scope of the present invention.

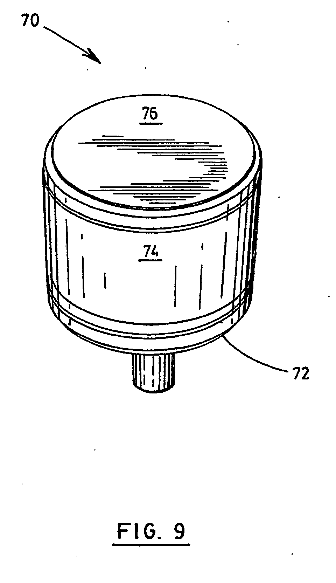

Most preferably the burner (70) has a generally tubular or cylindrical shape and a round bottom wall (72) as shown in figure 9. However, as shown in figures 1 to 3, the burner (70) may also have a rectangular shape with a rectangular bottom wall (72). More preferably, in order to obtain the desired proximity between the side wall section (74) of the burner (70) and the inner surface (50) of the slanted side wall section (40), the surface area of the bottom wall (72) of the burner (70) covers more than 50% of the surface area of the base wall (20) of the casing (10). More preferably still, the surface area of the bottom wall (72) of the burner (70) covers more than 75% of the surface area of the base wall (20) of the casing (10). Such relative surface area proportions between the side wall section (74) of the burner (70) and the slanted side wall (40) section of the casing (10) allow for most of the radiant thermal energy that is radially emitted from the side wall section (74) of the burner (70) to effectively reach the inner surface (50) of the slanted side wall section (40) of the casing (10). Thanks to the material of the inner surface (50) of the slanted side wall section (40), the radiant thermal energy that reaches the slanted side wall section (40) of the casing (10) is reflected upwardly toward the entire cooking surface or grill (60). The radiant thermal energy which would otherwise be lost is therefore conveniently and advantageously recuperated and used for cooking purposes. The effective area of the cooking surface or grill (60) is also therefore conveniently widened instead of being limited to a central portion of the grill (60) situated directly over and above the fire and burner (70). This feature of the invention provides a further advantage over the prior art barbecue devices.

The slanted side wall section (40) of the casing (10) is preferably at an angle ranging from about 135 degrees to about 110 degrees with respect to the base wall (20) of the casing (10). More preferably, the angle is 120 degrees. As discussed, such a slant in the side wall section (40) combined with an inner surface (50) made of a material capable of reflecting radiant thermal energy allows for efficient upward reflexion of the radiant thermal energy emitted from the side wall section (74) of the centrally located burner (70). Persons skilled in the art will readily recognize suitable materials for reflecting radiant thermal energy toward the cooking surface and the grill (60). Radiant thermal energy is therefore conveniently recuperated instead of lost as in the prior art devices.

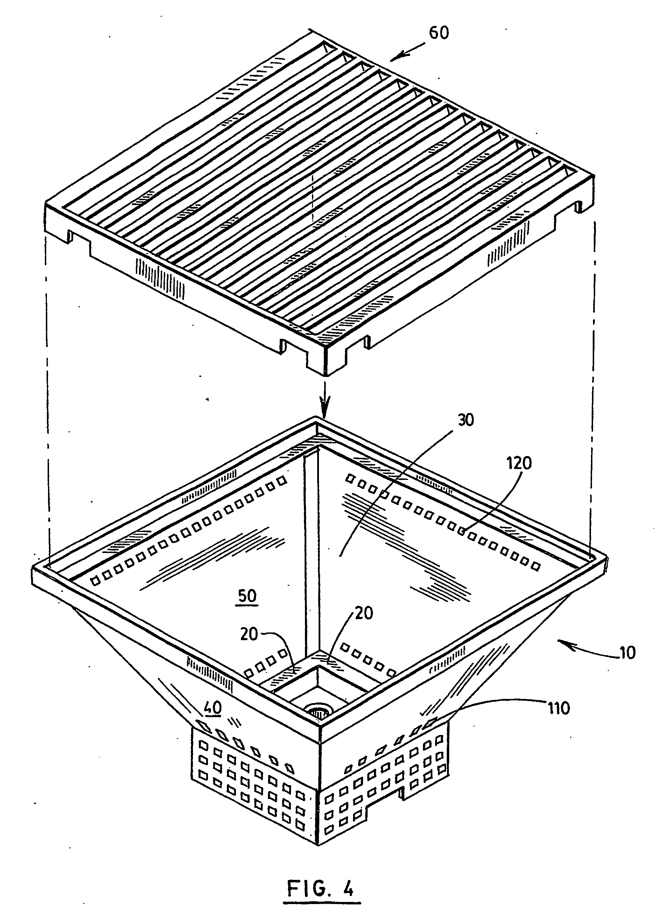

According to a still preferred aspect of the invention, the inverted frustum casing (10) is made of several sheets of a suitable material. These sheets may be partially folded over each other at the edges and welded together as shown in figure 4. However, the casing (10) may also be made of a single piece of suitable metal or material, as mentioned above, according to methods of manufacture also well known to persons skilled in the art.

Many grills and cooking surfaces are known and may be used with the barbecue apparatus of the present invention. In fact, any grill or equivalent cooking surface suitable for barbecuing foods may be used with the apparatus of the present invention. It is therefore understood herein and throughout the application, that the expression "grill" encompasses any and all grills as well as any and every other equivalent cooking surface suitable for use with barbecue.

Referring to figures 1 to 3, according to a further preferred aspect of the present invention, the barbecue cooking device (10) comprises a heat deflecting shield (100) that is mountable beneath the grill (60) on top of the burner (70) for deflecting flames emitted from the burner (70). This shield prevents foods from being rapidly charred or burned by the flames of the burner while being consistently undercooked in the peripheral area of the grill. More preferably, the deflecting shield (100) is provided with slits (102) as shown in figures 1, 2, 6, 7 and 8. These slits advantageously deflect and direct flames emitted from the burner to a location in between the heat deflecting shield (100) and the cooking surface or grill (60). Therefore heat of the flames is more evenly distributed throughout the cooking surface area situated above the heat deflecting shield (100). More preferably still, the deflecting shield (100) is sized to cover substantially all of the surface area of the grill (60), for diffusing the thermal energy reflected toward the grill (60). The inventors have found that the heat deflecting shield (100) captures the reflected thermal energy, evenly and uniformly diffuses and distributes it throughout the entire surface of the shield (100) and upwardly emits radiant thermal energy toward the cooking surface or grill (60). The purpose of the heat deflecting shield (100) of the present invention is therefore threefold. It acts simultaneously as a heat captor, diffuser/distributor, as well as a heat radiator. This feature provides an other convenient advantage over.the prior art barbecue devices which typically present important temperature variability across the cooking surface, especially between the central portion, situated directly above the burner, and the peripheral portion and corners. The present inventors have found that the present invention provides for a uniformly and evenly heated cooking surface, with as little as +/- 50°F temperature variation between the corners and the central portion of the cooking surface. This is a considerable improvement over the prior art devices.

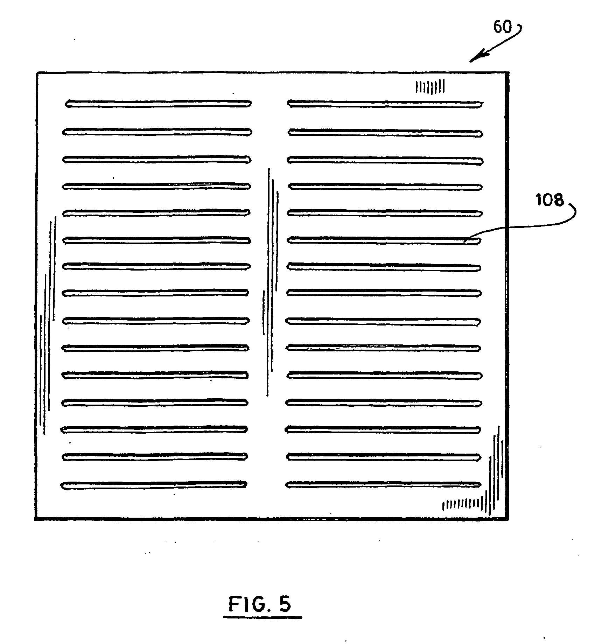

Turning now to figures 5, 6, 7 and 8, and in accordance with another preferred embodiment of the invention the heat deflecting shield (100) has a central portion (104) free of slits, and a peripheral portion (106) having a series of longitudinal slits (102) which are in a staggered arrangement with respect to longitudinal slots (108) of the grill (60), the central portion (102) being located on top of the burner (70) when the deflecting shield (100) is mounted beneath the grill (60). This arrangement contributes to shield the cooking surface from the open flame.

According to yet another preferred aspect of the present invention, the barbecue cooking device (1) comprises means for cooling the slanted side wall section (40). A non limiting example of such means is given herein but any other equivalent means may be used. Referring to figure 4, the cooling means comprises an air inlet (110) located in a lower portion of the slanted wall section (40) of the casing (10) for allowing air to enter into the casing (10) and an air outlet (120) located in an upper portion of the slanted wall section (40) for allowing air to exit the casing (10), thereby allowing a flow of air that cools the slanted wall section (40). More preferably, the air inlet (110) and air outlet (120) consist of a plurality of openings provided in the slanted wall section (40) of the casing (10). Such openings (110, 120) serve the purpose of creating a chimney effect whereby cool air enters into the casing (10) through the bottom openings (110), travels upwardly along the inner side (50) of the slanted wall section (40) and exits through the upper openings (120). The chimney effect so-created thereby reduces even more the temperature reached by the exterior of the casing (10).

The present inventors have found that the exterior of the casing (10) of the present invention reaches temperatures of about 300°C with such openings and slanted reflective inner surface whereas the prior art barbecue device casings typically reach over 600°C. Therefore, the combination of the slanted wall section (40), inner surface (50) made of a material capable of reflecting radiant energy and openings (110, 120) provide distinct advantages over the prior art devices.

Referring to figures 1 A and B, the device also preferably comprises a handle (130) for removing the grill (60).The handle (130) is preferably removably connectable to the grill (60), as best shown for example in referring to figure 1 B. More specifically, the handle (130) comprises a fork-shaped portion (132) with a grasping means for grasping the grill (60) as shown in figures 1 A and B.

As shown in figures 1 to 4, when the grill (60) has to be removed from the casing (10), for example when the burner (70) have to be cleaned, the handle (130) is connected to the grill (60) which then can be removed.

The burner (70) is such as described in US 4,924,847. However, any other equivalent burner which may be suitably and conveniently inserted into the barbecue cooking device may be used. The burner of US 4,924,847 operates on the principle that air is delivered to the combustion zone in a specific and controlled manner so as to optimize combustion. The air is injected to form a thin combustion zone through a series of jets or openings in a plate where the jets have a specific size and are arranged in a specific configuration in order to produce interaction between air flows: efficient combustion results. In practice the system includes a closed diffuser which has an upper plate having the aforementioned jets and a lower plate separated from the upper plate and attached thereto by side members so as to form a type of manifold. A conduit feeds into an opening in the lower plate and is connected to means for providing air under pressure to the diffuser. The solid fuel, such as wood, rests on the upper surface of the diffuser, and after ignition, burns in a controlled manner, by regulating the flow rate of the air to the combustion zone. The air under pressure may be supplied by an air pump in which case the flow of air is dictated by the size of the orifices or jets while the output of the pump controls the velocity at which that flow of air is injected into the combustion zone. The upper surface of the diffuser plate is provided with raised portions which hold the solid fuel off the jets in the plate as otherwise the air flow of some of the openings would be blocked. The raised portions are located between each opening in the plate, and the openings are arranged in a regular pattern as also described in US4,924,847.

Although preferred embodiments of the present invention have been described in detail herein and illustrated in the accompanying drawings, it is to be understood that the invention is not limited to these precise embodiments and that various changes and modifications may be effected therein without departing from the scope or spirit of the present invention.

## Claims

1. A barbecue cooking device (1) comprising:
- an inverted frustum casing (10) of a given height (11), having a base wall (20), an open top (30) and a slanted side wall (40) section extending from the base wall (20) to the top (30);
- a grill (60) mountable on the open top (30);
- a cup-shaped burner (70) located inside the casing (10) with a bottom wall (72) and a side wall section (74), the burner (70) comprising:
- a combustion chamber (76) in an upper portion thereof for burning a combustible material, thereby emitting thermal energy;
- an air chamber (78) located beneath the combustion chamber (76), the air chamber (78) having an air intake (82) for receiving air; and
- a diffuser plate (79) separating the combustion chamber (76) and the air chamber (78): and
- a blower (90), operatively connected to the air intake (82) of the air chamber (78) to provide forced-air to the air chamber (78):
the barbecue cooking device (1) being **characterized in that**
- the side wall section (40) of the casing (10) has an inner surface (50) made of a material capable of reflecting radiant energy and exdends at an angle ranging from about 135 degrees to about 110 degrees with respect to the base wall (20) of the casing (10):
- the said side wall section (74) of the burner (70) span the height (11) of the casing (10) such that most of the thermal energy emitted by the combustion chamber (76) radiate radially towards the slanted side wall section (40) of the casing (10) where it is reflected towards the grill (60) mounted on the top of the casing (10); and
- the blower (90) is part of a ventilation system (91) that further comprises:
- a pressurized air chamber (95) located downstream of the blower (90), said pressurized air chamber (95) having an outlet end (93) distal from the blower (90); and
- an air intake tube (98) having an open top end (99) secured to the air intake (82) of the air chamber (78); and an open bottom end (92) adapted to be connected to the outlet end (93) of the pressurized air chamber (95).

2. The barbecue cooking device (1) according to claim 1, **characterized in that** said inverted frustum casing (10) has an inverted pyramidal shape.

3. The barbecue cooking device (1) as claimed in claim 2, **characterized in that** the burner (70) has a generally tubular shape with a round bottom wall (72).

4. The barbecue cooking device (1) as claimed in claim 2, **characterized in that** the burner (70) has a generally rectangular shape with a rectangular bottom wall (72).

5. The barbecue cooking device (1) according to any one of claims 1 to 4, **characterized in that** the base wall (20) of the casing (10) has a given surface area and the bottom wall (72) of the burner (70) covers more than 50% of said surface area.

6. The barbecue cooking device (1) according to claim 5, **characterized in that** the bottom wall (72) of the burner (70) covers more than 75% of the surface area of the base wall (20).

7. The barbecue cooking device (1) according to any one of claims 1 to 6, **characterized in that** it comprises a heat defecting shield (100) mountable beneath the grill (60) on top of the burner (70) for deflecting flames emitted from the burner (70).

8. The barbecue cooking device (1) according to claim 7, **characterized in that** the deflecting shield (100) is provided with slits (102).

9. The barbecue cooking device (1) according to claim 8, wherein the grill (60) has a given surface area and the barbecue is **characterized in that** the defecting shield (100) is sized to cover substantially all of said surface area of the grill (60), for diffusing the thermal energy reflected towards the grill (60).

10. The barbecue cooking device (1) according to claim 9, **characterized in that** the deflecting shield (100) has a central portion (104) free of said slits (102), and a peripheral portion (106) having a series of longitudinal slits (102), the central portion (104) being located on top of the burner (70) when the shield (100) is mounted beneath the grill (60).

11. The barbecue cooking device (1) according to claim 10, wherein the grill (60) comprises a series of longitudinal slots (108), the longitudinal slits (102) of the shield (100) being in a staggered arrangement with respect to the longitudinal slots (108) of the deflecting shield (100).

12. The barbecue cooking device (1) according to any one of claim 1 to 11, **characterized in that** said angle is 120 degrees.

13. The barbecue cooking device (1) according to any one of claims 1 to 12, **characterized in that** it comprises means for cooling the slanted wall section (40).

14. The barbecue cooking device (1) according to claim 13, **characterized in that** the cooling means comprises an air inlet (110) located in a lower portion of the slanted wall section (40) for allowing air to enter into the casing (10) and an air outlet (120) located in an upper portion of the slanted wall section (40) for allowing air to exit the casing (10), thereby allowing a flow of air that cools the slanted wall section (40).

15. The barbecue cooking apparatus (1) according to claim 14, **characterized in that** the air inlet (110) and the air outlet (120) consist of a plurality of openings provided in the slanted side wall (40).

## Patentansprüche

1. Bratrost-Garvorrichtung (1), welche aufweist:
- ein umgekehrtes Kegelstumpf-OeMuse (10) mit einer Basiswand (20), einem offenen Oberteil (30) und einem geneigten Seitenwand-Abschnitt (40), der sich von der Basiswand (20) zu dem Oberteil (30) erstreckt;
- einen Grill (60), der auf dem offenen Oberteil (30) montierter ist;
- einen innerhalb des Gehäuses (10) angeordneten becherförmigen Brenner (70) mit einer Bodenwand (72) und einem Seitenwand-Abschnitt (74), wobei der Brenner (70) aufweist:
- eine Brennkammer (76) in seinem oberen Teil zum Verbrennen eines Brennmaterials, wodurch thermische Energie freigesetzt wird;
- eine unterhalb der Brennkammer (76) angeordnete Luftkammer (78) mit einem Lufteinlass (82) zur Aufnahme von Luft;
- eine verteilerplatte (79), welche die Brennkammer (76) und die Luftkammer (78) trennt; und
- ein Gebläse (90), welches mit dem Lufteinlass (82) der Luftkammer (78) funktionell verbunden ist, um der Luftkammer (78) zwangsgeförderte Luft zuzuführen;
wobei die Bratrost-Garvorrichtung (1) **dadurch gekennzeichnet ist, dass**:
- der Seitenwand-Abschnitt (40) des Gehäuses (10) eine innere Oberfläche (50) hat, welche aus einem Material gefertigt ist, das Strahlungsenergie reflektieren kann, und sich unter einem Winkel erstreckt, der im Bereich von etwa 135° bis etwa 110° bezüglich der Basiswand (20) des Gehäuses (10) liegt;
- der Seitenwand-Abschnitt (74) des Brenners (70) sich derart über die Höhe (11) des Gehäuses (10) erstreckt, dass ein Grossteil der durch die Brennkammer (76) freigesetzten thermischen Energie radial zu dem geneigten Seitenwand-Abschnitt (40) des Gehäuses (10) strahlt, wo sie zu dem auf dem Oberteil des Gehäuses (10) montierten Grill (60) hin reflektiert wird; und
- das Gebläse (90) Teil eines Belüftungssystems (91) ist, welches ausserdem aufweist:
- eine stromab von dem Gebläse (90) angeordnete Druckluft-Kammer (95) mit einem von dem Gebläse (90) distalen Auslassende (93); und
- ein Lufteinlass-Rohr (98) mit einem offenen oberen Ende (99), das an dem Lufteinlass (82) der Luftkammer (76) befestigt ist, und einem offenen unteren Ende (92), das für eine Verbindung mit dem Auslassende (93) der Druckluft-Kammer (95) ausgelegt ist.

2. Bratrost-Garvorrichtung (1) nach Anspruch 1, **dadurch gekennzeichnet, dass** das umgekehrte Kegelstumpf-Gehäuse (10) die Gestalt einer umgekehrten Pyramide hat.

3. Bratrost-Garvorrichtung (1) nach Anspruch 2, **dadurch gekennzeichnet, dass** der Brenner (70) eine vorwiegend rohrförmige Gestalt mit einer runden Bodenwand (72) hat.

4. Bratrost-Garvorrichtung (1) nach Anspruch 2, **dadurch gekennzeichnet, dass** der Brenner (70) eine vorwiegend quaderförmige Gestalt mit einer rechteckigen Bodenwand (72) hat.

5. Bratrost-Garvorrichtung (1) nach einem der Ansprüche 1 bis 4, **dadurch gekennzeichnet, dass** die Basiswand (20) des Gehäuses (10) einen gegebenen Flächeninhalt hat und die Bodenwand (72) des Brenners (70) mehr als 50% des Flächeninhalts abdeckt.

6. Bratrost-Garvorrichtung (1) nach Anspruch 5, **dadurch gekennzeichnet, dass** die Bodenwand (72) des Brenners (70) mehr als 75% des Flächeninhalte der Basiswand (20) abdeckt.

7. Bratrost-Garvorrichtung (1) nach einem der Ansprüche 1 bis 6, **dadurch gekennzeichnet, dass** sie eine die Hitze ablenkende Abschirmung (100) aufweist, die unterhalb des Grills (60) am Oberteil des Brenners (70) montierter ist, um aus dem Brenner (70) austretende Flammen abzulenken.

8. Bratrost-Garvorrichtung (1) nach Anspruch 7, **dadurch gekennzeichnet, dass** die ablenkende Abschirmung (100) mit Schlitzen (102) versehen ist.

9. Bratrost-Garvorrichtung (1) nach Anspruch 8, wobei der Grill (60) einen gegebenen Flächeninhalt hat und der Bratrost **dadurch gekennzeichnet ist, dass** die ablenkende Abschirmung (100) derart dimensioniert ist, dass sie im wesentlichen den gesamten Flächeninhalt das Grills (60) abdeckt, um die zu dem Grill (60) hin reflektierte thermische Energie zu verteilen.

10. Bratrost-Garvorrichtung (1) nach Anspruch 9, **dadurch gekennzeichnet, dass** die ablenkende Abschirmung (100) einen zentralen Abschnitt (104) hat, der frei von Schlitzen (102) ist, und einen peripheren Abschnitt (106) hat, der eine Reihe von Längsschlitzen (102) besitzt, wobei der zentrale Abschnitt (104) am Oberteil des Brenners (70) angeordnet ist, wenn die Abschirmung (100) unterhalb des Grills (60) montiert ist.

11. Bratrost-Garvorrichtung (1) nach Anspruch 10, bei welcher der Grill (60) eine Reihe von Länganchlitzen (105) aufweist, wobei die Längsschlitze (102) der Abschirmung (100) bezüglich der Längsschlitze (108) der ablenkenden Abschirmung (100) versetzt angeordnet sind.

12. Bratrost-Garvorrichtung (1) nach einem der Ansprüche 1 bis 11, **dadurch gekennzeichnet, dass** der winkel 120° beträgt.

13. Bratrost-Garvorrichtung (1) nach einem der Ansprüche 1 bis 12, **dadurch gekennzeichnet, dass** sie ein Mittel zum Kühlen des geneigten Wandabschnitts (40) aufweist.

14. Bratrost-Garvorrichtung (1) nach Anspruch 13, **dadurch gekennzeichnet, dass** das Kühlmittel einen in einem unteren Abschnitt des geneigten Wandabschnitts (40) angeordneten Lufteinlass (110) aufweist, um das Eintreten von Luft in das Gehäuse (10) zu ermöglichen, und einen in einem oberen Abschnitt des geneigten Wandabschnitts (40) angeordneten Luftauslass (120) aufweist, um das Austreten von Luft aus dem Gehäuse (10) zu ermöglichen, wodurch eine den geneigten Wandabschnitt (40) kühlende Luftströmung ermöglicht wird.

15. Bratrost-Garvorrichtung (1) nach Anspruch 14, **dadurch gekennzeichnet, dass** der Lufteinlass (110) und der Luftauslass (120) aus einer Vielzahl von öffnungen bestehen, die in dem geneigten Wandabschnitt (40) vorgesehen sind.

## Revendications

1. Dispositif de cuisson barbecue (1) comprenant :
- un boîtier (10) en tronc de cône inversé d'une hauteur (11) donnée, ayant une paroi (20) de base, un sommet (30) ouvert et une section de paroi latérale (40) oblique s'étendant depuis la paroi (20) de base vers le sommet (30), une surface interne (50) composée d'un matériau capable de réfléchir une énergie rayonnante ;
- une grille (60) pouvant être montée sur le sommet ouvert (30) ;
- un brûleur (70) hémisphérique situé à l'intérieur du boîtier (10) avec une paroi inférieure (72) et une section (74) de paroi latérale,
le brûleur (70) comprenant :
- une chambre (76) de combustion dans une partie supérieure de ce dernier destinée à brûler un matériau combustible, émettant ainsi une énergie thermique ;
- une chambre (78) d'air située au-dessous de la chambre (76) de combustion, la chambre (78) d'air ayant une prise (82) d'air destinée à recevoir l'air ; et
- une plaque (79) de diffusion séparant la chambre (76) de combustion et la chambre (78) d'air ; et
- un ventilateur (90), raccordé fonctionnellement à la prise (82) d'air de la chambre (78) d'air pour fournir de l'air pulsé à la chambre (78) d'air ;
le Dispositif de cuisson barbecue (1) étant **caractérisé en ce que** :
- la section (40) de paroi latérale du boîtier (10) a une surface interne (10) composée d'un matériau capable de réfléchir une énergie rayonnante et s'étend selon un angle compris entre environ 135 degrés et environ 110 degrés par rapport à la paroi (20) de base du boîtier (10) ;
- ladite section (74) de paroi latérale du brûleur (70) couvrant la hauteur (11) du boîtier (10) de telle manière que la plupart de l'énergie thermique émise par la chambre (76) de combustion rayonne radialement vers la section (40) de paroi latérale oblique du boîtier (10) où elle est réfléchie vers la grille (60) montée sur le sommet du boîtier (10) ; et
le ventilateur (90) fait partie d'un système (91) de ventilation qui comprend en outre :
- une chambre (95) d'air sous pression située en aval du ventilateur (90), ladite chambre (95) d'air sous pression ayant une extrémité (93) de sortie distale du ventilateur (90) ; et
- un tube (98) de prise d'air ayant une extrémité (99) de sommet ouverte solidement fixée à la prise (82) d'air de la chambre (78) d'air ; et une extrémité (92) inférieure ouverte adaptée afin d'être raccordée à l'extrémité (93) de sortie de la chambre (95) d'air sous pression.

2. Dispositif de cuisson barbecue (1) selon la revendication 1, **caractérisé en ce que** ledit boîtier (10) en tronc de cône inversé a une forme pyramidale inversée.

3. Dispositif de cuisson barbecue (1) selon la revendication 2, **caractérisé en ce que** le brûleur (70) a, de manière générale, une forme tubulaire avec une paroi (72) inférieure arrondie.

4. Dispositif de cuisson barbecue (1) selon la revendication 2, **caractérisé en ce que** le brûleur (70) a, de manière générale, une forme rectangulaire avec une paroi inférieure (72) rectangulaire.

5. Dispositif de cuisson barbecue (1) selon l'une quelconque des revendications 1 à 4, **caractérisé en ce que** la paroi (20) de base du boîtier (10) a une superficie de surface donnée et la paroi inférieure (72) du brûleur (70) recouvre plus de 50 % de ladite superficie de surface.

6. Dispositif de cuisson barbecue (1) selon la revendication 5, **caractérisé en ce que** la paroi inférieure (72) du brûleur (70) recouvre plus de 75 % de la superficie de surface de la paroi (20) de base.

7. Dispositif de cuisson barbecue (1) selon l'une quelconque des revendications 1 à 6, **caractérisé en ce qu'**il comprend un bouclier thermique déflecteur (100) pouvant être monté au-dessous de la grille (60) au sommet du brûleur (70) afin de dévier des flammes émises depuis le brûleur (70).

8. Dispositif de cuisson barbecue (1) selon la revendication 7, **caractérisé en ce que** le bouclier déflecteur (100) est prévu avec des fentes (102).

9. Dispositif de cuisson barbecue (1) selon la revendication 8, dans lequel la grille (60) a une superficie de surface donnée et le barbecue est **caractérisé en ce que** le bouclier déflecteur (100) est dimensionné afin de recouvrir sensiblement toute ladite superficie de surface de la grille (60), pour diffuser l'énergie thermique réfléchie vers la grille (60).

10. Dispositif de cuisson barbecue (1) selon la revendication 9, **caractérisé en ce que** le bouclier déflecteur (100) a une partie (104) centrale exempte desdites fentes (102), et une partie (106) périphérique ayant une série de fentes (102) longitudinales, la partie (104) centrale étant située au sommet du brûleur (70) lorsque le bouclier (100) est monté au-dessous de la grille (60).

11. Dispositif de cuisson barbecue (1) selon la revendication 10, dans lequel la grille (60) comprend une série d'entailles (108) longitudinales, les fentes (102) longitudinales du bouclier (100) étant dans un agencement à espacements réguliers par rapport aux entailles (108) longitudinales du bouclier déflecteur (100).

12. Dispositif de cuisson barbecue (1) selon l'une quelconque des revendications 1 à 11, **caractérisé en ce que** ledit angle est de 120 degrés.

13. Dispositif de cuisson barbecue (1) selon l'une quelconque des revendications 1 à 12 **caractérisé en ce qu'**il comprend un moyen destiné à refroidir la section (40) de paroi oblique.

14. Dispositif de cuisson barbecue (1) selon la revendication 13, **caractérisé en ce que** le moyen de refroidissement comprend une entrée (110) d'air située dans une partie inférieure de la section (40) de paroi oblique destinée à permettre à l'air d'entrer dans le boîtier (10) et une sortie (120) d'air située dans une partie supérieure de la section (40) de paroi oblique destinée à permettre à l'air de sortir du boîtier (10), permettant ainsi un écoulement d'air qui refroidit la section (40) de paroi oblique.

15. Appareil de cuisson barbecue (1) selon la revendication 14, **caractérisé en ce que** l'entrée (110) d'air et la sortie (120) d'air consistent en une pluralité d'ouvertures prévues dans la paroi (40) latérale oblique.
